# EUROPEAN PATENT APPLICATION

(11) **EP 3 336 557 A1**
(43) Date of publication of application: **20.06.2018**
(21) Application number: 17191379.1
(22) Date of filing: 15.09.2017
(51) Int. Cl.: G01N 35/10

(54) **ANALYSIS APPARATUS**

(30) Priority: 15.12.2016 JP 2016243853
(71) Applicant: Horiba, Ltd., Kyoto-shi, Kyoto 601-8510 (JP)
(72) Inventor: HAMADA, Motoaki, Kyoto, 601-8510 (JP); TAKEMOTO, Kazumasa, Kyoto, 601-8510 (JP)
(74) Representative: Isarpatent

(57) **Abstract**

The analysis apparatus of the present invention determines sufficiency/insufficiency of the test liquid by, before aspiration of the test liquid in container 1 with the nozzle 2, comparing the amount of the test liquid determined based on the descending distance of the nozzle 2 from the position at which the tip of the nozzle contacts the liquid surface of the test liquid, with the proper amount of the test liquid for the container identified by the container identification system.

## Description

### TECHNICAL FIELD OF THE INVENTION

The present invention relates to an analysis apparatus for automatic analysis of biological samples such as blood, urine etc., and the like in biochemical tests and the like.

### BACKGROUND OF THE INVENTION

In hematological analysis, for example, an automatic analysis apparatus used for biochemical tests and the like aspirates blood, which was collected from a patient and placed in a given sample container, with a nozzle, and discharges a predetermined amount of the blood into plural chambers in a test part, which is what is called a dispensing operation.

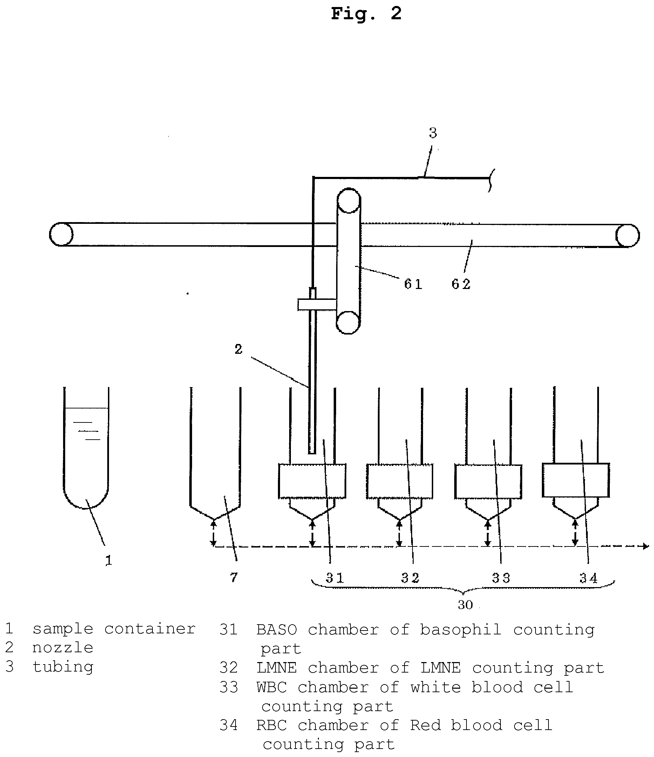

Fig. 2 schematically shows the main constitution of an automatic blood analysis apparatus which counts red blood cells and classifies leukocytes into 5 groups. As shown in Fig. 2, when a sample container 1 containing blood is set at a predetermined position, a sampling nozzle (a long and thin pipe which is also called a "needle") 2 moves to aspirate a given amount of the blood in the sample container 1, and discharges same into each chamber (31, 32, 33, 34) in an exclusive blood cell counting part 30, after which a counting device formed in or connected to the chamber obtains measurement data, and a control part (not shown) processes the measurement data and analyzes frequency distribution and the like.

To precisely perform hematological aspiration and division and discharge of a given amount (i.e., "dispensing") by nozzle 2, the nozzle 2 is connected to a pump via a tubing (both not shown), the tubing between nozzle 2 and the pump is filled with an operation fluid such as dilute solution and the like, whereby depressurization (aspiration) and pressurization (discharge) by the pump are accurately conveyed to the nozzle. Nozzle 2 can move horizontally and downwardly-upwardly by a vertical movement mechanism 61 and a horizontal movement mechanism 62. The movements of inserting nozzle 2 into the sample container 1 and each chamber to perform aspirating and discharging are controlled by a control part (e.g., computer).

A method and mechanism thereof for dividing a blood sample aspirated in the nozzle at predetermined ratios in the longitudinal direction of the tubing and sequentially dispensing same in the chambers in each blood cell counting part are explained in detail in, for example, JP-A-11-218538.

### SUMMARY OF THE INVENTION

As a problem associated with, for example, aspirating a sample in a sample container with a nozzle and distributing the sample to plural analysis parts performing analyses different from each other, as mentioned above, an insufficient amount of the sample aspirated in the nozzle, which fails to meet the proper amount (insufficient amount of sample aspirated, also called sample short), can be mentioned.

When sample short occurs, for example, the results of an analysis part supplied with an insufficient amount of sample differ from the results that should have been obtained, which produces incorrect analysis results (diagnosis).

Such sample short occurs when the amount of sample in a sample container is not sufficient (insufficient sample amount in sample container), and is also caused by fouling and clogging of the nozzle and piping, operation failure of the driving part and the like.

Conventionally, attempts have been made to solve the problem of insufficient aspiration amount of sample by imaging the sample amount in a sample container. However, such apparatus requires a complicated constitution and is expensive. Also, solution of the problem was sought by directly detecting the amount of a blood sample aspirated in a nozzle by a sensor and the like in blood analysis. However, when a blood sample is aspirated with a nozzle, since stainless steel with high corrosion resistance is often used as a material of the nozzle, it is difficult to directly detect the amount of the blood sample aspirated in the nozzle by a sensor.

The problem of the present invention is to provide an automatic blood analysis apparatus provided with a function to determine simply and with high accuracy when the amount of a test liquid in a sample container is insufficient such as insufficient sample amount in a sample container and the like.

To solve the above-mentioned problem, the present invention has the following constitution.
[1] An automatic analysis apparatus comprising a dispensing system for suctioning and discharging a test liquid in a container by a nozzle, a container identification system for identifying the kind of the container, and a control section for controlling these operations, wherein
   the aforementioned dispensing system comprises the nozzle, a pump and a conduit connecting the nozzle and the pump, wherein the conduit comprises a pressure sensor and the nozzle is moved and the pump is driven while monitoring information of pressure in the conduit, which is obtained by the pressure sensor, and is provided with a liquid surface detection mechanism for detecting contact of a nozzle tip with a liquid surface of the test liquid in the container, and a container bottom detection mechanism for detecting contact of a nozzle tip with a bottom of the container; and
   the aforementioned control section stores a proper amount of the test liquid for each container, and determines whether the test liquid is sufficient or insufficient based on a comparison of the amount of the test liquid before suction by the nozzle, which is determined based on the descending distance of the nozzle from the position at which the nozzle tip contacts the liquid surface, with the proper amount of the test liquid for the container which is identified by the container identification system.
[2] The automatic analysis apparatus of the above-mentioned [1], wherein the comparison of the amount of the test liquid determined based on the descending distance of the nozzle with the proper amount of the test liquid for the container is performed by comparing the descending distance with a liquid surface height of the proper amount of the test liquid, or comparing a value obtained by multiplying the descending distance by a cross-sectional area of the container with the volume of the proper amount of the test liquid.
[3] The automatic analysis apparatus of the above-mentioned [1] or [2], wherein the control section controls to cancel suction of the test liquid in the container once the amount of the test liquid is determined to be insufficient.
[4] The automatic analysis apparatus of any one of the above-mentioned [1] - [3], wherein the control section determines an insufficient suction amount of the test liquid for the container when an internal pressure of the conduit turns upward before reaching a proper suction time necessary for sucking the proper amount after the start of suctioning by the nozzle.

The "test liquid" in the present invention is a concept including not only samples of blood, urine and the like which are the targets of tests and analyses in biochemical tests and the like, but also a mixture of a sample and a reagent used for the tests and analyses of the sample, or a reagent itself.

The automatic analysis apparatus of the present invention can prevent production of incorrect analysis (diagnosis) results, since it can determine whether the amount of the test liquid in a container is less than the proper amount before aspiration of the test liquid. In addition, it can prevent unnecessary consumption of reagents.

### BRIEF DESCRIPTION OF THE DRAWINGS

Fig. 1 schematically shows one example of the dispensing system of the automatic blood analysis apparatus of the present invention.
Fig. 2 schematically shows the configuration of the main part of a conventional automatic blood analysis apparatus and that of the present invention.
Fig. 3 is a graph showing changes in the internal pressure of the tubing during a sample aspiration operation performed in the dispensing system of Fig. 1.
Fig. 4 is a schematic showing of rising and falling of a nozzle in a state where a curved portion of the tubing is held vertically above a connection part of the nozzle of the dispensing system and the flexible tubing.
Fig. 5 is a schematic showing of a sample container holder and a holder storage part constituting the container identification system.
Fig. 6 is a flow chart of an aspiration step of a sample in a dispense operation by the automatic blood analysis apparatus of one embodiment of the present invention.

In the Figures, 1 is a container (sample container), 2 is a nozzle, 3 is a tubing, 4 is a pump, 5 is a pressure sensor, 6 is a two-way valve, 10 is a dispensing system, 20 is a control part, 30 is a blood cell counting part, 50 is a sample container holder, 54 is a holder storage part, and M1 - M4 are each a microswitch.

### DETAILED DESCRIPTION OF THE INVENTION

The present invention is explained in more detail in the following by referring to one embodiment of the present invention.

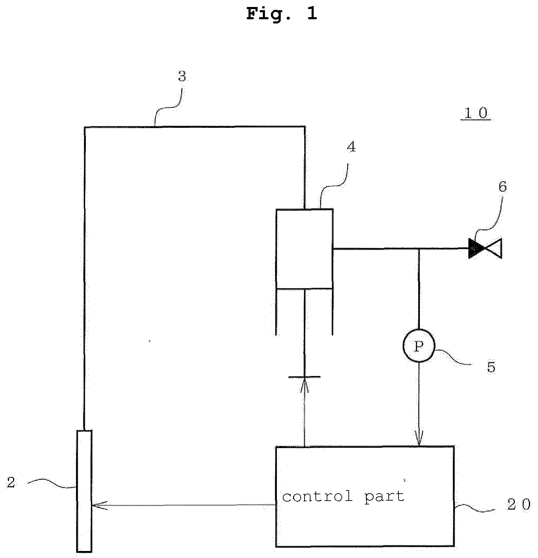

Fig. 1 is a schematic showing of the main part (dispensing system) of one embodiment of the automatic blood analysis apparatus of the present invention, and Fig. 2 schematically shows a nozzle moving mechanism and plural analysis parts (blood cell counting parts) into which samples (blood) aspirated by the nozzle are discharged. In Fig. 1 and Fig. 2, the same symbol shows the same or corresponding part.

The dispensing system 10 has a nozzle 2, a pump 4 and a tubing 3 connecting them. An operation fluid such as a dilute solution and the like is filled in the tubing between the nozzle 2 and the pump. The tubing 3 is provided with a pressure sensor 5 that detects the pressure in the tubing. The nozzle 2 can move up and down and left and right by the vertical movement mechanism 61 and the horizontal movement mechanism 62 shown in Fig. 2. Symbol 6 in the Figure is a two-way valve for injecting a reagent.

Nozzle 2 is electrically connected to the control part 20 via a transfer means thereof (vertical movement mechanism 61 and horizontal movement mechanism 62), and pump 4 is electrically connected to a control part 20 via a driving means (not shown). The pressure sensor 5 provided on the tubing 3 is electrically connected to a control part 20, and detection signals showing the pressure in the tubing 3 are sent from the pressure sensor 5 to the control part 20.

The control part 20 receives signals from the pressure sensor 5 and performs a given dispensing operation by controlling the transfer means of nozzle 2 and the driving means of pump 4 while monitoring the information of the pressure in the tubing 3.

The control part 20 is a control part that integratedly controls operations of the analysis apparatus as a whole, including not only the control of the dispensing system 10 but also the control of a container identification system described below. As the control part 20, a computer is suitable, and various outside arithmetic operation apparatuses and drive apparatuses for respective actuators may be connected as appropriate.

In the automatic analysis apparatus of this embodiment, a sample container 1 containing a sample is set at a predetermined position in the apparatus, and the sample container 1, a cleaning chamber 7 and blood cell counting chambers 31 - 34 of each blood cell counting part are aligned along a straight line extending in the horizontal direction. Due to a vertical movement mechanism 61 and a horizontal movement mechanism 62, a nozzle 2 moves in the horizontal direction along the aforementioned straight line and moves in the vertical direction to repeatedly enter into or go out from sample containers and each chamber for aspirating a blood sample from the sample container 1 and dispensing same to each chamber 31-34. An exhaust pipe shown with a broken line is connected to the lower end part of the cleaning chamber 7 for blood cell counting and each blood cell counting chamber 31-34, whereby a waste liquid is delivered to a waste liquid container (not shown) by a pump (not shown). A cleaning chamber 7 for blood cell counting is an exclusive chamber for cleaning the nozzle after dispensing the blood sample. In Fig. 2, while the bottom part of the container in the chamber of each blood cell counting part is drawn to have a corner, it is in fact preferable to have an appropriate roundness in consideration of smooth inflow and outflow of the liquid.

In the dispensing system 10, control of movement of nozzle 2, control of driving of pump 4 for aspirating and discharging of nozzle 2 and the like are all executed by the control part 20. The control part 20 is configured to count and measure blood cells in communication with each blood cell counting chamber, and analyze the obtained count data and measurement data.

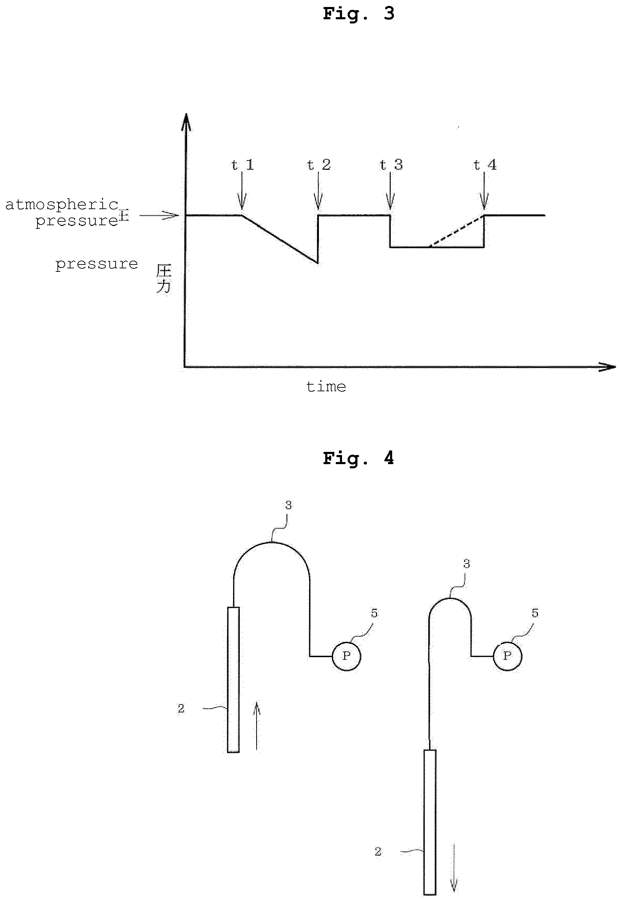

Fig. 3 is a graph showing pressure changes in the tubing 3, which were detected by the pressure sensor 5 during the dispense operation.

The vertical axis shows the pressure in the tubing, and the horizontal axis shows the operation time. When nozzle 2 before aspiration is at an initial position above that of the sample container 1 (pump in stop state), the pressure in the tubing (inside of tubing and nozzle) is equal to the atmospheric pressure. When the nozzle 2 descends, the pressure in the tubing decreases along with the start of the descending (t1 shows start of descending), and when the tip having an opening of nozzle 2 contacts the liquid surface of the sample in the sample container 1 (t2 shows contact with liquid surface), the pressure in the tubing 3 returns to a pressure equal to the atmospheric pressure. Thereafter, when aspiration operation is performed by operating pump 4 while descending nozzle 2 (t3 shows start of aspirating), the pressure in the tubing decreases along with the start of the aspiration operation and reaches an appropriate constant pressurization state, the aspiration operation is continued for the time necessary for reaching a given amount of the sample to be aspirated, and the operation of pump 4 is discontinued (t4 shows pump discontinuation time). When the operation of pump 4 is discontinued, the pressure in the tubing returns again to a pressure equal to the atmospheric pressure. Then, nozzle 2 is moved upward to leave the sample container 1, and the aspirated sample is discharged into plural analysis parts (i.e., each chamber (31, 32, 33, 34) of blood cell counting part 30 shown in Fig. 2).

In the dispensing system 10, the tubing 3 is preferably a flexible tubing, and it is preferable that the dispensing system is configured so that the nozzle 2 moves up and down with a curved portion of the tubing 3 held vertically above the connecting part between the nozzle 2 and the tubing 3, shown in Fig. 4. With such configuration, the length of the tubing from the sensor 5 to the vertex of the curved portion of the tubing 3 (= amount of operation fluid in the tubing) varies as the nozzle 2 moves up and down, the drop of pressure in the tubing along with the descent of the nozzle 2 until the tip of the nozzle 2 contacts the liquid surface of the sample in the container appears more clearly, and the precision of liquid surface detection increases. In addition, pump 4 in the dispensing system 10 may be replaced by a quantitative discharger.

The dotted line in the graph, which shows pressure change in Fig. 3, shows that, due to stain on the nozzle and tubing, malfunction of the pump and driving part and the like, the sample in the sample container 1 could not be aspirated by nozzle 2 continuously for a given time (given aspiration time) until the total aspiration amount of the sample reaches a given amount necessary for the analysis after dispensing, and the air was aspirated before elapse of the given time (given aspiration time) and the internal pressure of tubing 3 increased (an inclination occurred in the graph).

Generally, the minimum amount of test liquid necessary for analysis (test) is determined by the kind of the test liquid, the content of analysis (test) and the like, and therefore, the kind (size (capacity), shape, etc.) of the container accommodating the test liquid in an automatic analysis apparatus is also determined by the kind of the test liquid, the content of analysis (test) and the like. Therefore, prior to aspiration of the test liquid with the nozzle, the kind of the container containing the test liquid is identified, whether the amount of the test liquid contained in the container satisfies the proper amount for the container (i.e., a predetermined amount capable of securing the minimum amount necessary for analysis (test), by the aspiration operation of the nozzle) is determined, and when the amount does not reach the proper amount, the test liquid is not aspirated, whereby incorrect analysis results (diagnosis) can be prevented.

The automatic analysis apparatus of the present invention has a container identification system for identification of the kind of the container, to determine, before a aspiration operation of the test liquid with the nozzle, whether the amount of the test liquid in the container is the proper amount determined for the container. In addition, the dispensing system 10 is provided with a liquid surface detection mechanism for detecting contact of a nozzle tip with a surface of the test liquid in the container, and a container bottom detection mechanism for detecting contact of a nozzle tip with a bottom of the container.

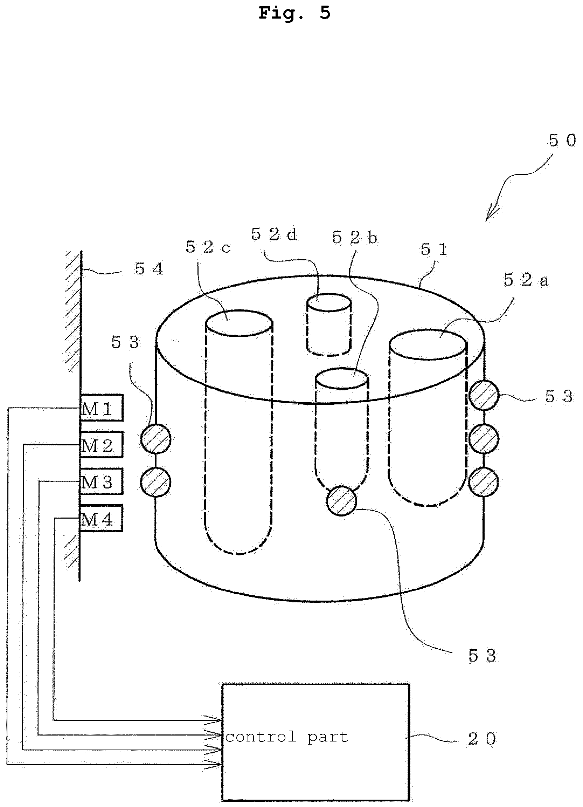

The container identification system can be composed of, as shown in Fig. 5, for example, a sample container holder 50, in which a frame body 51 having container receiving parts (concave parts) 52a - 52d having shapes corresponding to the outer shape of each kind of the container is formed and one or more protrusions 53 whose number indicates the kind of the container inserted into the container receiving part (concave part) are formed in the vicinity of each of the container receiving parts (concave parts) 52a - 52d on the side face of the frame body 51, and plural microswitches (identification sensors) M1 - M4 formed on the inner surface of a holder storage part 54 surrounding the sample container holder 50. Microswitches (identification sensors) M1 - M4 are electrically connected to the control part 20, and the control part 20 receives signals from the microswitches (identification sensors) M1 - M4, identifies the kind of the containers, and collates same with the proper amount of the test liquid determined for each kind of the container and stored in memory in advance.

Control part 20 stores cross-sectional areas of the container for each kind of the container, and the proper amount of the test liquid determined for each kind of the container in memory, and the proper amount is memorized as a volume in the container (volume of proper amount of test liquid), or height from the bottom of the container to the liquid surface of the test liquid (the liquid surface height of the proper amount of the test liquid),when the proper amount of the test liquid is charged in the container. When the proper amount of the test liquid is stored as a volume of the test liquid, the cross-sectional area of the container per each kind of the container is used when the volume is divided by the cross-sectional area of the container to calculate the liquid surface height of the proper amount of the test liquid, and the calculated liquid surface height is compared with the descending distance of the nozzle from the liquid surface of the test liquid. When the proper amount of the test liquid is stored as a liquid surface height of the test liquid, since the descending distance of the nozzle from the liquid surface of the test liquid is compared with the stored liquid surface height of the proper amount of the test liquid, the cross-sectional area of the container for each kind of the container is not used. When the proper amount of the test liquid is stored as a volume of the test liquid, the cross-sectional area of the container per each kind of the container is used when the descending distance of the nozzle from the liquid surface of the test liquid is multiplied by the cross-sectional area of the container to calculate the volume of the test liquid in the container and the volume is compared with the volume of the proper amount of the test liquid. The control part 20 also stores the proper aspiration time when the proper amount of the test liquid is aspirated by the nozzle without aspiration failure.

For detection of the liquid surface, the control part 20 detects, based on the signals from the pressure sensor 5 provided in the tubing 3 in the dispensing system 10, the position of the tip of the nozzle 2 at the time point when the pressure in the tubing 3, which decreases as the nozzle 2 decreases, returns to a pressure equal to the atmospheric pressure, as the position (height) of the liquid surface of the test liquid in container 1.

The container bottom detection mechanism is constituted of, for example, a stepping motor having a rotary encoder equipped to a vertical movement mechanism 61 of the nozzle, compares a drive pulse to the stepping motor with a rotor position detecting pulse from the motor, and detects contact of the tip of the nozzle 2 with the bottom of the sample container 1 when they failed to maintain a given relationship (e.g., when difference between drive pulse and rotor position detecting pulse exceeds a given value).

It is needless to say that the above-mentioned liquid surface detection mechanism, container identification system and container bottom detection mechanism are only examples and may be constituted of other known technical means as long as the same function can be provided.

As mentioned above, the control part 20 memorizes the cross-sectional area of the container for each kind of the container, and determines whether the test liquid in the container is sufficient or insufficient based on a comparison, before aspiration of the test liquid in container 1 with the nozzle 2, of the descending distance of the nozzle 2 from the position at which the nozzle tip contacts the liquid surface or a value obtained by multiplying the descending distance by a cross-sectional area of the container 1, with the liquid surface height or the volume of the proper amount of the test liquid for the container 1 which is identified by the container identification system.

For example, before aspiration of the test liquid in container 1 with the nozzle 2, nozzle 2 is inserted into the container 1 and lowered, and when the tip of the nozzle 2 contacts the bottom of the container 1 before the descending distance of the nozzle 2 from the position at which the nozzle tip contacts the liquid surface becomes equal to the liquid surface height of the proper amount of the test liquid for container 1, the amount of the test liquid in the container 1 is determined to be insufficient (determination operation of first embodiment). Alternatively, before aspiration of the test liquid in container 1 with the nozzle 2, nozzle 2 is inserted into the container 1 and lowered, and when the tip of the nozzle 2 contacts the bottom of the container 1 before the product of the descending distance of the nozzle 2 from the position at which the nozzle tip contacts the liquid surface and the cross-sectional area of the container 1 becomes equal to the volume of the proper amount of the test liquid for container 1, the amount of the test liquid in the container 1 is determined to be insufficient (determination operation of second embodiment).

In addition, as in the following third and fourth embodiments, the determination operation may presuppose lowering of the tip of the nozzle 2 until it contacts the bottom of container 1.

That is, before aspiration of the test liquid in container 1 with the nozzle 2, nozzle 2 is inserted into the container 1, the nozzle 2 is lowered until the tip of the nozzle 2 contacts the bottom of container 1, and the descending distance of the nozzle 2 from the position at which the tip of the nozzle 2 contacts the liquid surface is smaller than the liquid surface height of the proper amount of the test liquid for container 1, the amount of the test liquid in the container 1 is determined to be insufficient (determination operation of third embodiment). Alternatively, before aspiration of the test liquid in container 1 with the nozzle 2, nozzle 2 is inserted into the container 1, the nozzle 2 is lowered until the tip of the nozzle 2 contacts the bottom of container 1, and the product of the descending distance of the nozzle 2 from the position at which the nozzle tip contacts the liquid surface and the cross-sectional area of the container 1 is smaller than the volume of the proper amount of the test liquid for container 1, the amount of the test liquid in the container 1 is determined to be insufficient (determination operation of fourth embodiment).

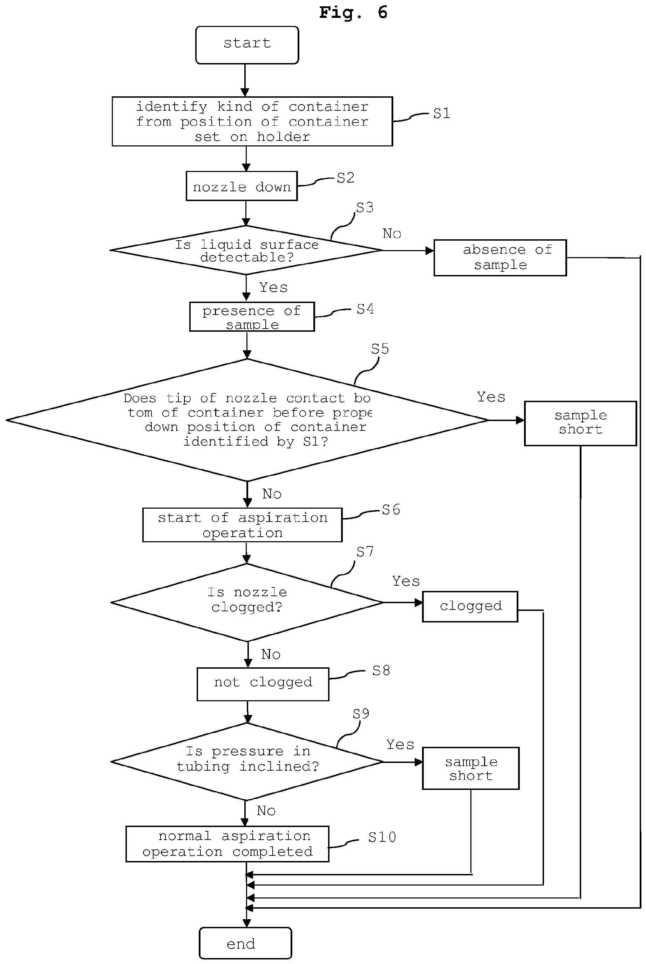

The automatic analysis apparatus of the present invention performs the aspiration operation of the sample in the dispensing operation for blood analysis according to, for example, the procedures in the flow chart shown in Fig. 6. Fig. 6 shows a flow containing the determination operation of the above-mentioned first embodiment.

On start of the operation, the container identification system identifies the kind of the container from the position of the container set on the container holder (step S1). Then, nozzle 2 is lowered (step S2). The liquid surface detection mechanism detects whether the liquid surface is detectable (step S3), when the liquid surface detection mechanism does not detect the liquid surface (the tip of the nozzle 2 does not contact the liquid surface of the sample), absence of sample is determined and the operation is terminated. When the liquid surface detection mechanism detects the liquid surface (step S4), the nozzle 2 further lowered, and whether the tip of the nozzle 2 contacts the bottom of the container 1 before the proper down position (the position at which the volume based on the descending distance from the position at which the nozzle contacts the liquid surface equals the volume of the proper sample amount) based on the proper sample amount that the container identified in step S1 has is determined (step S5). When the tip of the nozzle 2 contacts the bottom of the container 1, an insufficient sample amount (sample short) is determined, and the operation is terminated. When the tip of the nozzle 2 does not contact the bottom of the container 1, aspiration operation is started (step S6). In the next step (step S7), clogging of the nozzle 2 is checked and, when clogging of nozzle 2 is determined, an insufficient sample amount (sample short) is determined and the operation is terminated. Absence of clogging of the nozzle 2 is determined (step S8), the aspiration operation is continued, whether the pressure in the tubing turns upward before reaching the proper aspiration time (time for nozzle to aspirate the proper amount of sample without aspiration failure) is monitored (whether the pressure in the tubing is inclined) (step S9). When the pressure in the tubing turns upward (the pressure in the tubing is inclined), an insufficient sample amount (sample short) is determined and the aspiration operation is terminated. When the pressure in the tubing is constant for the proper aspiration time, normal aspiration is determined and the aspiration operation is completed (step S10). In the determination of clogging of the nozzle in step S7, when the nozzle is clogged, a given pressurization state does not continue from the start of the aspiration operation (t3) and the pressure in the tubing decreases sharply, as shown in the graph of Fig. 3. The control part 20 detects such state and determines clogging of the nozzle. After the sample aspiration operation by the nozzle, a successive distribution operation by discharging the sample into plural test parts (chamber of each blood cell counting part) is performed.

The flow chart of the dispensing operation step of the blood analysis including a determination operation of the above-mentioned third or fourth embodiments is the flow chart of Fig. 6 except that step S5 is substituted by the step, "is the amount of the test liquid obtained from the distance from the liquid surface to the bottom of the container when the nozzle is lowered until the tip contacts the bottom of the container smaller than the proper amount of the test liquid of the container identified in S1?"

While the main constitution (dispensing system) of the automatic analysis apparatus of the present invention has been explained in the above by referring to one embodiment of an automatic blood analysis apparatus having the apparatus constitution of Fig. 1, 2, 4 or 5, the treatment in the chamber of each blood cell counting part of one embodiment of the automatic blood analysis apparatus is briefly explained in the following.

### [Processing in white blood cell counting part]

The WBC chamber provided as a white blood cell counting part contains an electrode pair for measuring the white blood cell count by the impedance method, moreover, a light-irradiation part and a light-receiving part for measuring the absorbance by colorimetry (non-cyanogen method) and the like, and the hemoglobin concentration is measured. In the Figure, the mechanism of injecting the hemolysis agent, and a detailed mechanism for performing the impedance method are omitted. The same applies to other blood cell counting parts.

In a preferable configuration example, the blood sample dispensed in the WBC chamber is diluted with a diluting liquid discharged in the chamber through a piping connected to a reagent port located at the upper part of the chamber. The WBC chamber is further added with a reagent for red blood cell hemolysis, wherein the final dilution rate of the blood sample in the WBC chamber is, for example, about 1/250. Thereafter, the white blood cells are counted based on the impedance method in the WBC chamber.

A part of the sample diluted first in the WBC chamber 34 is also distributed in the RBC chamber 33 to count the red blood cells therein. The RBC chamber 33 is a chamber for counting red blood cells and platelets, and provided with a device having an aperture and electrodes on the lower part of the chamber, so that the impedance method can be performed.

### [Processing in basophil counting part]

The BASO chamber provided as a basophil counting part is an exclusive chamber configured to count basophils by the impedance method. The blood sample dispensed to the BASO chamber is first diluted with a hemolysis agent for the basophil measurement, the agent is discharged into the chamber through a piping connected to a reagent port at an upper part of the chamber.

### [Processing in LMNE counting part]

First, lymphocyte (L), monocyte (M), neutrophil (N) and eosinophil (E) are reacted with a staining reagent in the LMNE chamber to count them in a flow cell.

The blood sample dispensed to the LMNE chamber is first diluted with a staining reagent discharged into the chamber through a piping connected to a reagent port at an upper part of the chamber. A diluting liquid is further added to the LMNE chamber. The dilution rate of the blood sample in the LMNE chamber is, for example, about 1/60 - 1/100.

The stained and diluted blood sample is transferred to a flow cell, wherein lymphocyte, monocyte, neutrophil and eosinophil are counted based on the light-focused flow impedance method, and the data is processed in the control part to count the frequency per volume, which is shown in a scattergram such as LMNE matrix and the like.

The count results according to the light-focused flow impedance method performed in the flow cell also include the measurement results by the impedance method in addition to the optical count results, and therefore, the obtained count data also includes the count data of basophil. That is, the LMNE counting part also outputs the count data of the white blood cells as a whole.

A mechanism capable of performing a preferable method such as an impedance method, flow cytometry, a light-focused flow impedance method and the like may be formed in each blood cell counting part according to the count target blood cell to provide a constitution enabling counting in each control part.

The impedance method is also called an electric resistance method, and is a technique wherein an aperture and an electrode pair are formed in the flow channel for a sample liquid, the electrodes are provided to interpose the aperture between them, and the volume of the blood cell passing through the aperture is measured based on the changes in the electrical characteristics (particularly changes in the pulse voltage) between the electrodes (e.g., JP-A-2004-257768, JP-A-2011-180117, JP-A-2005-62137).

In the apparatus of JP-A-2011-180117, the flow channel on the downstream side of the aperture diverges in a unique configuration and, in the apparatus of JP-A-2005-062137, a pair of electrodes is set on the downstream side of the aperture in a unique configuration. The basic principle of the electrical resistance method, wherein an aperture is positioned between a pair of electrodes and the size of the particles is determined, is the same as that mentioned above.

Flow cytometry is a technique wherein a predetermined irradiation light is irradiated as a beam light focused on the blood cells in a sample liquid advancing through a flow channel, and the blood cells are distinguished from the optical characteristics such as light scattering, light absorbance and the like resulting therefrom (e.g., JP-A-8-327529).

The light-focused flow impedance method enables both optical counting by flow cytometry and electrically characteristic counting by the impedance method by incorporating an aperture and an electrode pair for the impedance method in the flow channel of a flow cell (flow cytometer).

Since the automatic analysis apparatus of the present invention can determine insufficiency of the test liquid in a container before aspiration of the test liquid, incorrect analysis (diagnosis) results can be prevented. In addition, it can prevent unnecessary consumption of reagents.

## Claims

1. An analysis apparatus comprising:
a dispensing system in which a nozzle aspirates and discharges a test liquid in a container;
identification sensors which identify a kind of the container; and
a computer which controls the dispensing system and the identification sensors, wherein
said dispensing system comprises:
the nozzle;
a pump;
a tubing connecting the nozzle and the pump, the tubing comprising a pressure sensor configured to monitor a pressure in the tubing while the nozzle is moved and the pump is driven;
a liquid surface detection mechanism which detects contact of a nozzle tip with a liquid surface of the test liquid in the container; and
a container bottom detection mechanism which detects contact of the nozzle tip with a bottom of the container, and
said computer stores a proper amount of the test liquid for each container, and determines whether the test liquid is sufficient or insufficient based on a comparison of the amount of the test liquid before aspiration by the nozzle, which is determined based on the descending distance of the nozzle from the position at which the nozzle tip contacts the liquid surface, with the proper amount of the test liquid for the container which is identified by the identification sensors.

2. The analysis apparatus according to claim 1, wherein the comparison of the amount of the test liquid determined based on the descending distance of the nozzle with the proper amount of the test liquid for the container is performed by comparing the descending distance with a liquid surface height of the proper amount of the test liquid, or comparing a value obtained by multiplying the descending distance by a cross-sectional area of the container with the volume of the proper amount of the test liquid.

3. The analysis apparatus according to claim 1 or 2, wherein the computer controls to cancel aspiration of the test liquid in the container once the amount of the test liquid is determined to be insufficient.

4. The analysis apparatus according to claim 1 or 2, wherein the computer determines an insufficient aspiration amount of the test liquid for the container when an internal pressure of the tubing turns upward before reaching a proper aspiration time necessary for aspirating the proper amount after the start of aspirating by the nozzle.
